# EUROPEAN PATENT APPLICATION

(11) **EP 4 302 907 A1**
(43) Date of publication of application: **10.01.2024**
(21) Application number: 23170814.0
(22) Date of filing: 28.04.2023
(51) Int. Cl.: B22F 10/28, B22F 10/37, B22F 10/85, B22F 12/60, B29C 64/153, B33Y 30/00, B33Y 50/02

(54) **THREE-DIMENSIONAL POWDER BED FUSION ADDITIVE MANUFACTURING APPARATUS, THREE-DIMENSIONAL POWDER BED FUSION ADDITIVE MANUFACTURING METHOD, AND METHOD FOR SETTING MOVING SPEED OF RECOATER MEMBER IN THREE-DIMENSIONAL POWDER BED FUSION ADDITIVE MANUFACTURING**

(30) Priority: 27.06.2022 JP 2022102464
(71) Applicant: Jeol Ltd., Akishima-shi, Tokyo 196-8558 (JP)
(72) Inventor: NARUSE, Tatsuo, Tokyo, 196-8558 (JP); SATO, Takashi, Tokyo, 196-8558 (JP); MIYAKITA, Ayumu, Tokyo, 196-8558 (JP)
(74) Representative: Boult Wade Tennant LLP

(57) **Abstract**

Provided is a three-dimensional powder bed fusion additive manufacturing (PBF-AM) apparatus (1, 2) including a base plate (12), a regulating member (14) configured to level powder (100) supplied onto the base plate (12) by moving over the base plate (12) at a height position keeping a predetermined interval from a surface of the base plate (12) to form a powder layer (101), and a controller (20, 20') configured to control movement of the regulating member (14), in which an input unit (21) for inputting manufacturing data is included, and the controller (20, 20') causes the regulating member (14) to move at a moving speed based on the manufacturing data input from the input unit (21).

## Description

### BACKGROUND

### Technical Field

The present invention relates to a three-dimensional powder bed fusion additive manufacturing (PBF-AM) apparatus, a three-dimensional PBF-AM method, and a method for setting a moving speed of a regulating member in three-dimensional PBF-AM.

### Related Art

As one of three-dimensional PBF-AM techniques, a powder bed type manufacturing method is known. In this manufacturing method, a new powder material is supplied onto the previously formed cured layer and the uncured powder material, a width plate-shaped regulating member traversing a manufacturing frame is moved in the horizontal direction at a position slightly higher than the manufacturing frame to regulate the height position of the powder material, and a layer of the powder material having a constant thickness as a whole is formed. Next, the surface of the formed layer of the powder material is irradiated with an electron beam or a laser. As a result, the whole or a part of the powder material is melted to integrally join the powder materials to form a cured layer, and the newly formed cured layer is integrated with the cured layer laminated below. Then, by repeating a step of forming such a cured layer, a three-dimensional powder bed fusion additive manufactured body, in which a plurality of cured layers having a predetermined pattern shape are laminated, can be obtained (see Patent Literature 1 below).

### Citation List

### Patent Literature

Patent Literature 1: JP 2001-152204 A

### SUMMARY

In the three-dimensional PBF-AM method described above, however, when the layer of the powder material is formed by horizontal movement of the width plate-shaped regulating member, granulated powder, in which pieces of powder conveyed by the regulating member adhere to each other due to thermal influence, is likely to be created. In addition, the granulated powder created tends to grow in size due to the thermal influence, and sinks into the layer of the powder material because it is heavier than the powder. For this reason, when the granulated powder is pushed and moved by the regulating member during the movement of the regulating member, a streak-like trace, through which the granulated powder has passed, is left in the layer of the powder material after the regulating member moves, which is a factor that hinders manufacturing accuracy.

Therefore, an object of the present invention is to provide a three-dimensional PBF-AM apparatus, a three-dimensional PBF-AM method, and a method for setting a moving speed of a regulating member in three-dimensional PBF-AM, which can improve manufacturing accuracy.

The present invention for achieving such an object is a three-dimensional PBF-AM apparatus including: a base plate; a regulating member configured to level powder supplied onto the base plate by moving over the base plate at a height position keeping a predetermined interval from a surface of the base plate to form a powder layer; and a controller configured to control movement of the regulating member, in which an input unit for inputting manufacturing data is included, and the controller causes the regulating member to move at a moving speed based on the manufacturing data input from the input unit.

The present invention can provide a three-dimensional PBF-AM apparatus, a three-dimensional PBF-AM method, and a method for setting a moving speed of a regulating member in three-dimensional PBF-AM, which can improve manufacturing accuracy.

### BRIEF DESCRIPTION OF DRAWINGS

FIG. 1 is a schematic configuration view of a three-dimensional PBF-AM apparatus according to a first embodiment;
FIG. 2 is a top view of a main part of the three-dimensional PBF-AM apparatus according to the first embodiment;
FIG. 3 is a top view for explaining a formation process (part 1) of a powder layer in a three-dimensional PBF-AM method;
FIG. 4 is views (part 1) for explaining details of a movement trace of granulated powder created in the formation process of a powder layer;
FIG. 5 is a top view for explaining a formation process (part 2) of a powder layer in the three-dimensional PBF-AM method;
FIG. 6 is a graph showing a relationship between a moving speed of a regulating member and a ratio of dropped powder that has been dropped to a dust box on the movement start position side;
FIG. 7 is a schematic configuration view of a three-dimensional PBF-AM apparatus according to a second embodiment;
FIG. 8 is a view illustrating a moving speed database for a regulating member in the three-dimensional PBF-AM apparatus according to the second embodiment;
FIG. 9 is a view illustrating an input screen of the three-dimensional PBF-AM apparatus according to the second embodiment;
FIG. 10 is a view illustrating another example of the moving speed database for the regulating member in the three-dimensional PBF-AM apparatus according to the second embodiment; and
FIG. 11 is a view illustrating another example of the input screen of the three-dimensional PBF-AM apparatus according to the second embodiment.

### DETAILED DESCRIPTION

Hereinafter, embodiments to which the present invention is applied will be described in detail with reference to the drawings in the order of a three-dimensional PBF-AM apparatus and a three-dimensional PBF-AM method. In each embodiment, the same components are denoted by the same reference numerals, and redundant description may be omitted.

### <<First embodiment>>

### <Three-dimensional PBF-AM apparatus>

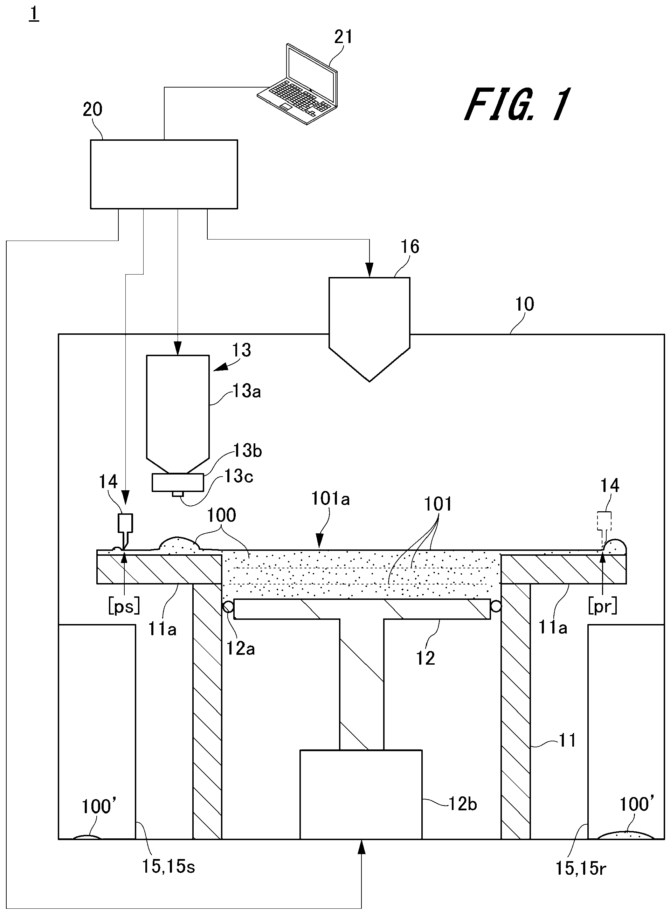

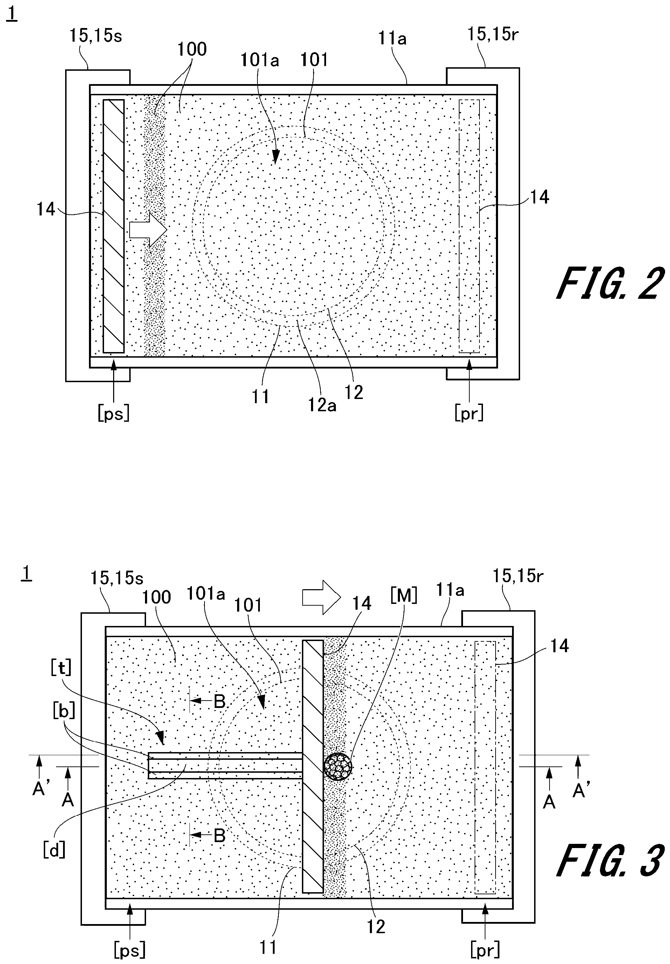

FIG. 1 is a schematic configuration view of a three-dimensional PBF-AM apparatus 1 according to a first embodiment. FIG. 2 is a top view of a main part of the three-dimensional PBF-AM apparatus according to the first embodiment. The three-dimensional PBF-AM apparatus 1 illustrated in these views is a powder bed type three-dimensional PBF-AM apparatus 1, and includes, in a decompression chamber 10, a forming tank 11, a base plate 12, a powder supply device 13, a regulating member 14, a dust box 15, and an energy ray irradiation unit 16. The three-dimensional PBF-AM apparatus 1 further includes a controller 20 and an input unit 21. Note that the powder supply device 13, the energy ray irradiation unit 16, the controller 20, and the input unit 21 are illustrated only in FIG. 1. Hereinafter, each component constituting the three-dimensional PBF-AM apparatus 1 will be described.

### [Forming tank 11]

The forming tank 11 is a tubular structure erected in the decompression chamber 10, and a three-dimensional powder bed fusion additive manufactured object is formed inside the tubular structure. The tubular shape constituting the forming tank 11 is a cylindrical shape as an example. Such a forming tank 11 includes a flange-shaped table 11a extended from the circumferential edge of an upper opening toward the outer circumferential side.

### [Base plate 12]

The base plate 12 is provided in contact with the inner circumferential wall of the forming tank 11, and constitutes the bottom surface of the forming tank 11. In a gap between the inner circumferential wall of the forming tank 11 and the end edge portion of the base plate 12, a flexible seal 12a is disposed, and the slidability and sealability of the base plate 12 in the forming tank 11 are secured. In the inside of the forming tank 11 whose bottom surface is constituted by such a base plate 12, powder 100 is stored, and a powder layer 101, in which the powder 100 is laminated at a predetermined thickness, is sequentially laminated.

The base plate 12 also includes a base plate drive unit 12b. The base plate drive unit 12b controls lifting and lowering of the base plate 12 in the forming tank 11, so that the depth of the forming tank 11 can be varied. Such a base plate drive unit 12b is connected to the controller 20, and lifts and lowers the base plate 12 on the basis of an instruction from the controller 20.

### [Powder supply device 13]

The powder supply device 13 supplies the powder 100 to the upper portion of the table 11a. The powder supply device 13 includes a powder tank 13a and a fixed amount feeder 13b connected to the bottom of the powder tank 13a, and supplies a predetermined amount of the powder 100 onto the table 11a from a powder discharge port 13c provided in the fixed amount feeder 13b. The powder supply device 13 supplies the predetermined amount of the powder 100 in a line pattern that starts at a position, which is near a movement start position [ps] set in the vicinity of the end edge on one side of the table 11a and closer to the upper opening of the forming tank 11 than the movement start position [ps] is, and extends over the upper opening of the forming tank 11. Such supply of the powder 100 by the powder supply device 13 is performed by an instruction from the controller 20. The movement start position [ps] is a position where the regulating member 14 to be described next starts its movement.

### [Regulating member 14]

The regulating member 14 is an elongated plate-shaped member extending over the upper opening of the forming tank 11. Such a regulating member 14 is freely movable along the table 11a and the upper opening of the forming tank 11 at a height position where one side of the plate-shaped material is kept at a predetermined interval from the table 11a. After the powder 100 is supplied from the powder supply device 13 onto the table 11a, the regulating member 14 moves from the movement start position [ps] set in the vicinity of the end edge on one side of the table 11a toward the upper opening along the table 11a in accordance with an instruction from the controller 20.

Furthermore, the regulating member 14 moves across the upper opening of the forming tank 11 to a return position [pr] so as to pass over the upper opening. The return position [pr] is a position set in the vicinity of the end edge on the other side of the table 11a. After reaching the return position [pr], the regulating member 14 moves from the return position [pr] toward the movement start position [ps]. As a result, the regulating member 14 levels the powder 100 supplied onto the table 11a and makes the thickness of the powder 100 contained in the forming tank 11 uniform, thereby forming the powder layer 101.

In addition, the regulating member 14 discharges the surplus powder 100, which has not been contained in the forming tank 11 and has protruded from the upper opening of the forming tank 11, to the outer circumference of the table 11a.

### [Dust box 15]

The dust boxes 15 are disposed below the table 11a on both sides in the moving direction of the regulating member 14. These dust boxes 15 include a dust box 15s on the movement start position [ps] side and a dust box 15r on the return position [pr] side. These dust boxes 15 contain, as dropped powder 100', the surplus powder 100 discharged to the outer circumference of the table 11a by the regulating member 14 The above-described return position [pr] is set at a position where most of the surplus powder 100 is dropped to the dust box 15r on the return position [pr] side.

### [Energy ray irradiation unit 16]

The energy ray irradiation unit 16 is an irradiation unit that emits an energy ray capable of melting the powder 100, and is disposed to face the base plate 12 such that the powder layer 101, made of the powder 100 laminated on the base plate 12, is irradiated with the energy ray. The energy ray is, for example, an electron beam, and the illustrated energy ray irradiation unit 16 is an electron beam irradiation device. Such an energy ray irradiation unit 16 irradiates the powder layer 101, made of the powder 100 stored on the base plate 12 in the forming tank 11, with the energy ray while scanning the set irradiation range under the drive control by the controller 20 to be described next.

### [Controller 20]

The controller 20 controls the drive of the above-described components, and is constituted by a computer. The computer is hardware used as a so-called computer.

The computer includes a central processing unit (CPU), a random access memory (RAM), and a nonvolatile storage unit such as a read only memory (ROM) or a hard disk drive (HDD), and may further include a network interface. With the CPU executing a manufacturing program recorded in the ROM or the RAM, the controller 20 constituted by such a computer performs a three-dimensional PBF-AM method to be described below.

### [Input unit 21]

The input unit 21 is for inputting an instruction to start forming a three-dimensional powder bed fusion additive manufactured object and inputting manufacturing data necessary for forming the three-dimensional powder bed fusion additive manufactured object. The manufacturing data input from the input unit 21 is, for example, a moving speed [S] of the regulating member 14 and further change data on the set moving speed [S]. The controller 20 described above controls the moving speed of the regulating member 14 on the basis of the manufacturing data input from the input unit 21. Other manufacturing data input from the input unit 21 may be metal structure control and shape data of a three-dimensional powder bed fusion additive manufactured object to be manufactured by the three-dimensional PBF-AM apparatus 1, and a manufacturing program related to a manufacturing procedure of the three-dimensional powder bed fusion additive manufactured object recorded in the ROM or the RAM of the controller 20. Such an input unit 21 is, for example, a display unit with a touch panel, a keyboard, or a connection interface with an external personal computer.

### <Three-dimensional PBF-AM method>

Next, a three-dimensional PBF-AM method using the three-dimensional PBF-AM apparatus 1 as described above will be described. First, an operator of the three-dimensional PBF-AM apparatus 1 inputs, from the input unit 21, manufacturing data necessary for producing a three-dimensional powder bed fusion additive manufactured object. In addition, the operator inputs, as the manufacturing data, the moving speed [S] of the regulating member 14 in a formation process of the powder layer 101 that is performed later.

At this time, the operator refers to a database and selects the moving speed [S] of the regulating member 14 in the formation process of the powder layer 101. This database is a collection of data in which the moving speed [S] of the regulating member 14 is made to correspond to each type of the powder 100 by a setting method described in detail later. Such a database may be in an electronic data format or a data format printed on a paper medium. The operator refers to this database and selects the moving speed [S] of the regulating member 14 that is made to correspond to the powder 100 used in the three-dimensional PBF-AM.

In the above database, the moving speed [S] of the regulating member 14 may be individually made to correspond to each type of powder 100, metal structure control of a manufactured object to be produced in the three-dimensional PBF-AM, and further manufacturing data including other manufacturing conditions. In this case, the operator selects a temperature made to correspond to the type of the powder 100 and the manufacturing conditions as the moving speed [S] of the regulating member 14.

The operator inputs the moving speed [S] selected as described above from the input unit 21. When the moving speed [S] of the regulating member 14 has already been input as a part of the manufacturing data, the operator inputs change data for changing the moving speed [S] of the regulating member 14 on the basis of the selected moving speed [S].

The controller 20 acquires the manufacturing data and the moving speed [S] of the regulating member 14 that have been input from the input unit 21 as described above, and further acquires a trigger signal to start manufacturing from the input unit 21, thereby executing the manufacturing program held in advance in the following procedure.

### [Evacuation of air in decompression chamber 10]

First, the controller 20 evacuates air in the decompression chamber 10. At this time, the regulating member 14 is set to be disposed at the movement start position [ps] outside the supply position of the powder 100 on the table 11a. In addition, the base plate 12 is set to be disposed at a predetermined height position from the upper opening of the table 11a.

### [Heat treatment on base plate 12]

Next, the controller 20 performs a heat treatment on the base plate 12 by irradiation with energy rays from the energy ray irradiation unit 16. The controller 20 irradiates, by driving the energy ray irradiation unit 16, the surface of the base plate 12 with the energy rays at a current value at the level of heating the surface of the base plate 12. As a result, the temperature of the base plate 12 is raised in advance to a temperature at which the powder 100 supplied onto the base plate 12 thereafter is completely sintered temporarily in a temporary sintering treatment to be performed thereafter.

### [Supply of powder 100]

Next, the controller 20 supplies the powder 100 in a line pattern on the end edge of the table 11a by driving the powder supply device 13.

### [Formation process of powder layer 101]

Thereafter, the controller 20 causes the regulating member 14 to move along the upper surface of the table 11a to perform the formation process of the powder layer 101. At this time, the controller 20 causes the regulating member 14 to move from the movement start position [ps] set at the end edge on one side of the table 11a toward the upper opening of the forming tank 11 along the table 11a, and further causes the regulating member 14 to move to the return position [pr] set at the end edge on the other side of the table 11a after passing over the upper opening of the forming tank 11. Then, the surplus powder 100 is dropped to the dust box 15r on the return position [pr] side.

Furthermore, the controller 20 causes the regulating member 14 to move in the opposite direction from the return position [pr], and causes the regulating member 14 to move back and forth over the table 11a and the upper opening of the forming tank 11.

As a result, the controller 20 supplies the powder 100 supplied onto the table 11a into the forming tank 11, and makes the height of the powder 100 contained in the forming tank 11 substantially equal to the height of the upper opening of the forming tank 11. Then, one layer of the powder layer 101, in which the powder 100 is spread to a predetermined height, is formed on the upper portion of the base plate 12 at the bottom of the forming tank 11, and a powder bed surface 101a, the surface of the powder layer 101, is flattened.

In the movement of the regulating member 14 as described above, the controller 20 causes the regulating member 14 to move in accordance with the moving speed [S] input from the input unit 21.

### [Temporary sintering treatment and melting treatment]

Next, the controller 20 performs a temporary sintering treatment on the powder layer 101 by irradiation with energy rays from the energy ray irradiation unit 16. Thereafter, the controller 20 performs a melting treatment on the powder layer 101 by irradiation with the energy rays from the energy ray irradiation unit 16. At this time, based on the design data on a three-dimensional powder bed fusion additive manufactured object held in advance, the controller 20 irradiates a structure region according to the two-dimensional shape of a portion, obtained by slicing the designed three-dimensional powder bed fusion additive manufactured object at a height interval of the powder layer 101, with the energy rays. As a result, the portion irradiated with the energy rays in the powder layer 101 becomes a plate-shaped structure with the powder 100 of the powder layer 101 melted and then solidified.

After the above, the controller 20 performs the processing after the supply of the powder 100 repeatedly to form a three-dimensional powder bed fusion additive manufactured object in which the plate-shaped structures, in which the powder 100 is solidified, are laminated.

### <Method for setting moving speed of regulating member 14>

Next, a method for setting the moving speed [S] of the regulating member 14 at the time of the movement of the regulating member 14, performed in the formation process of the powder layer 101 in the above-described procedure of the three-dimensional PBF-AM method, will be described.

Here, the moving speed [S] of the regulating member 14, creation of granulated powder [M], and details of movement trace of the granulated powder [M] will first be described, and then a method for setting the moving speed [S] of the regulating member 14 using the movement trace will be described.

### [Moving speed [S] of regulating member 14 and creation of granulated powder [M]]

FIG. 3 is a top view for explaining the formation process (part 1) of the powder layer 101 in the three-dimensional PBF-AM method. This view illustrates a state of a forward path in which, in back-and-forth movement of the regulating member 14, the regulating member 14 is moved from the movement start position [ps] toward the return position [pr]. In the formation process of the powder layer 101, the granulated powder [M], in which pieces of the powder 100 conveyed by the regulating member 14 adhere to each other, may be created mainly by thermal influence from the base, as illustrated in this view. The granulated powder [M] is easily created particularly on the base plate 12 having a high base temperature. In addition, the powder 100 is greatly different in melting point, thermal conductivity, various friction coefficients, and the like depending on the type thereof. Therefore, the ease of the creation of the granulated powder [M] varies depending on the type of the powder 100 and also varies depending on thermal manufacturing conditions.

In addition, the granulated powder [M] created grows in size by the movement, and sinks into the layer of the powder material because it is heavier than the powder 100. In the powder layer 101 after the regulating member 14 moves, a streak-like movement trace [t] is left after the granulated powder [M] passes through, as described later.

Here, the granulated powder [M] is created by adhesion between pieces of the powder 100 in a state of being conveyed by the regulating member 14. Therefore, by setting the moving speed [S] of the regulating member 14 to a speed as high as possible, it is possible to keep the state, in which the powder 100 is conveyed by the regulating member 14, for a short period of time and to suppress inflow of thermal energy to the powder, and therefore it is important to suppress creation of the granulated powder [M].

### [Movement trace of granulated powder [M]]

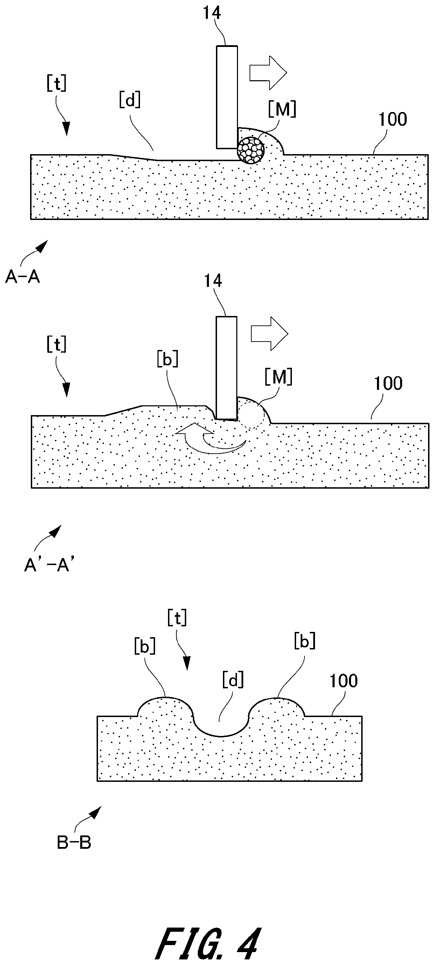

FIG. 4 is views (part 1) for explaining details of a movement trace [t] of the granulated powder [M] formed in the formation process of the powder layer 101, and is views corresponding to A-A cross section, A'-A' cross section, and B-B cross section in FIG. 3. When the granulated powder [M] is pushed and moved by the regulating member 14, a recess [d] is formed as the movement trace [t] in a portion where the powder 100 is pushed away by the granulated powder [M], as illustrated in FIGS. 3 and 4.

The powder 100 pushed away by the granulated powder [M] goes around the lower portion of the regulating member 14 (see A'-A' cross section). As a result, projections [b] are formed as the movement traces [t] on both sides of the recess [d] beside a passing portion, through which the regulating member 14 has passed, of the granulated powder [M]. On both sides of the recess [d] in the moving direction of the regulating member 14, projections, raised by being pushed away by the granulated powder [M], are formed, but these portions are shaved off by the movement of the regulating member 14.

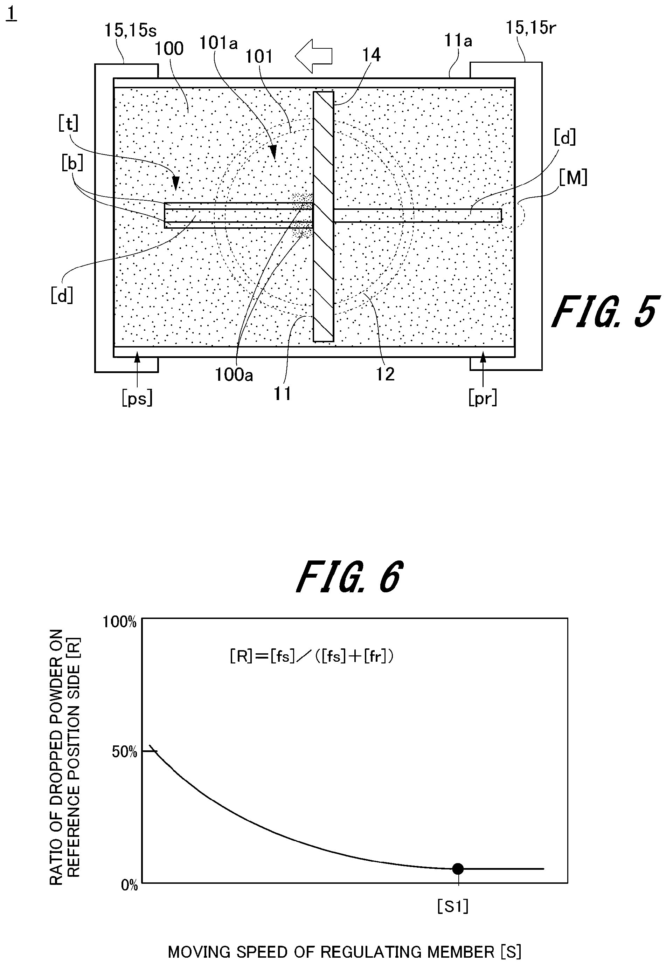

FIG. 5 is a top view for explaining the formation process (part 2) of the powder layer 101 in the three-dimensional PBF-AM method. This view illustrates a state of a return path in which, in the back-and-forth movement of the regulating member 14, the regulating member 14 is moved from the return position [pr] toward the movement start position [ps]. When the regulating member 14 is moved from the return position [pr] toward the movement start position [ps] in the formation process of the powder layer 101 as illustrated in this view, the projection [b], of the movement trace [t] of the granulated powder [M] formed in the powder layer 101 in the movement in the opposite direction, is shaved off by the regulating member 14. On the other hand, the recess [d] is left in the powder layer 101 even after the regulating member 14 passes through. Although not illustrated here, a new movement trace [t] is also formed in the course of moving from the return position [pr] toward the movement start position [ps], as described with reference to FIG. 4.

In the above-described movement, from the return position [pr] toward the movement start position [ps], of the regulating member 14, the powder 100, obtained by shaving off the projection [b] of the movement trace [t] of the granulated powder [M], is conveyed to the movement start position [ps] by the regulating member 14. Then, a part of the shaved-off powder 100a is dropped to, of the two dust boxes 15, the dust box 15s on the movement start position [ps] side.

Here, it is configured such that, under the condition that the granulated powder [M] is not formed, most of the surplus powder 100 is dropped to the dust box 15r on the return position [pr] side. That is, it is configured such that, under the condition that the granulated powder [M] is not formed, the dropped powder 100' in the dust box 15r on the movement start position [ps] side can be suppressed to an extremely small amount.

### [Method for setting moving speed of regulating member 14]

Therefore, the moving speed of the regulating member 14 is set in a range where, of the dropped powder 100' that have been dropped to the two dust boxes 15 as illustrated in FIG. 1, the ratio of the dropped powder 100' in the dust box 15s on the movement start position [ps] side is smaller, and preferably in a range where the ratio is the smallest.

In this case, for each powder 100 used in the three-dimensional PBF-AM, a preliminary experiment to produce the three-dimensional powder bed fusion additive manufactured object, in which the moving speed [S] of the regulating member 14 is changed, is performed, and the mass of the dropped powder 100' in each of the two dust boxes 15 is measured. Then, for each type of the powder 100, the relationship between the moving speed of the regulating member 14 and the ratio of the dropped powder 100' in the dust box 15s on the movement start position [ps] side is obtained.

FIG. 6 is a graph showing the relationship between the moving speed of the regulating member 14 and a ratio [R] of the dropped powder that has been dropped to the dust box 15s on the movement start position side. Here, the ratio [R] of the dropped powder on the movement start position side is obtained as the ratio [R] of the dropped powder = [fs]/([fs] + [fr]) from a mass [fs] of the dropped powder 100' in the dust box 15s on the movement start position [ps] side and a mass [fr] of the dropped powder 100' in the dust box 15r on the return position [pr] side.

From the relationship thus obtained, the range of the speed, where the ratio [R] of the dropped powder on the movement start position side is the smallest, is obtained for each powder 100, and the slowest speed [S1] in this range is set as the moving speed [S] of the regulating member 14. This is because: due to an increase in the moving speed [S] of the regulating member, the vibration of a drive unit of the regulating member 14 is increased; and due to influence of the vibration, the regulating member 14 shakes and the flatness of a powder bed surface 101a of the powder layer 101 is impaired. Therefore, in a case where it is not necessary to consider the influence of vibration of the drive unit of the regulating member 14, the moving speed [S] of the regulating member 14 is preferably set to a speed as fast as possible within a speed range where the ratio [R] of the dropped powder on the movement start position side is the smallest, in consideration of productivity.

As described above, a database is created in which the moving speeds [S] set for each type of the powder 100 is made to correspond to each powder 100.

In the setting of the moving speed [S] of the regulating member 14 described above, a preliminary experiment, for each powder 100, may be further performed for each of other manufacturing data (e.g., manufacturing conditions), so that, for each powder 100, the moving speed [S] may be set for each of the manufacturing conditions.

In producing the three-dimensional powder bed fusion additive manufactured object in the preliminary experiment, it is not necessary to complete the three-dimensional powder bed fusion additive manufactured object. The preliminary experiment may be performed in which the number of the layers of the powder layers 101 is limited. However, as the number of the layers of the powder layer 101 in the preliminary experiment is larger, a more accurate ratio [R] of the dropped powder can be obtained, and therefore it is preferable to form a powder layer 101 having a larger number of the layers.

In the above description, the moving speed [S] of the regulating member 14 is set on the basis of the ratio [R] of the dropped powder on the movement start position [ps] side. However, the moving speed [S] of the regulating member 14 may be set on the basis of the amount of the dropped powder 100' in the dust box 15s on the movement start position [ps] side. Even in this case, the range of the speed, where the amount of the dropped powder 100' in the dust box 15s on the movement start position [ps] side is the smallest, is obtained, and the slowest speed [S1] in this range may be set as the moving speed [S] of the regulating member 14.

Furthermore, the method for setting the moving speed [S] of the regulating member 14 as described above is not limited to implementation for creating the database. For example, for the specific powder 100 used in the three-dimensional PBF-AM, the above-described preliminary experiment may be performed to set the moving speed [S] of the regulating member 14, and the set moving speed [S] may be input from the input unit 21 to start the three-dimensional PBF-AM.

### <Effects of first embodiment>

According to the first embodiment described above, it is configured such that, in forming the powder layer 101 in the procedure for performing the three-dimensional PBF-AM, the controller 20 that controls the moving speed of the regulating member 14 can change the moving speed [S] of the regulating member 14 on the basis of a setting from the input unit 21. Therefore, for each type of the powder 100, it is possible to form the powder layer 101 by causing the regulating member 14 to move at the moving speed [S] at which the granulated powder [M] and the movement trace [t] can be prevented from being created. This makes it possible to improve manufacturing accuracy in the three-dimensional PBF-AM.

### <<Second embodiment>>

### <Three-dimensional PBF-AM apparatus>

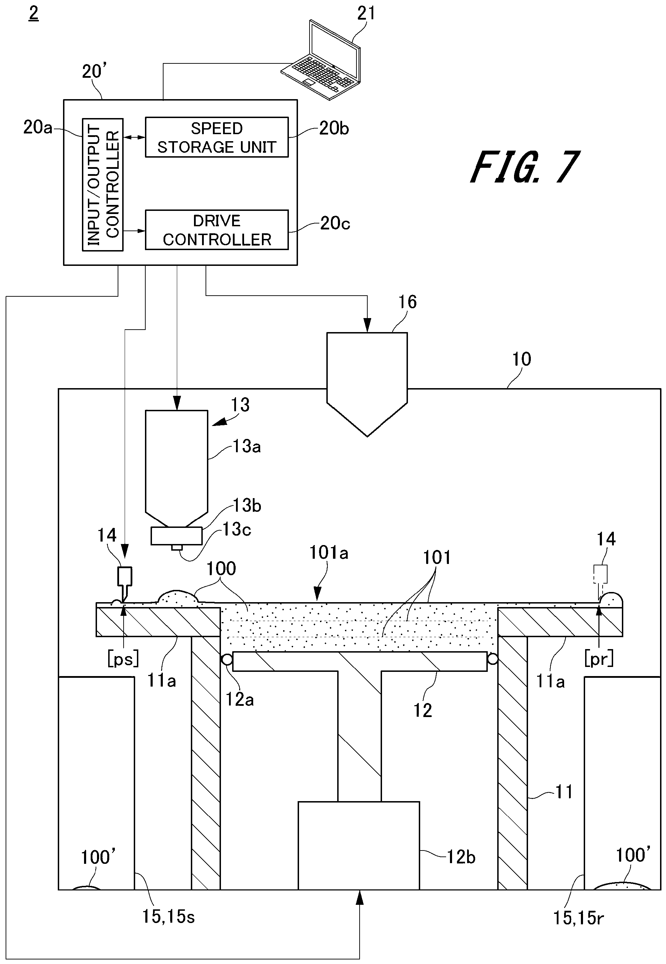

FIG. 7 is a schematic configuration view of a three-dimensional PBF-AM apparatus 2 according to a second embodiment. The three-dimensional PBF-AM apparatus 2 of the second embodiment illustrated in this view differs from the three-dimensional PBF-AM apparatus 1 of the first embodiment in a configuration of a controller 20', and the other configurations are the same. Therefore, the configuration of the controller 20' and a display image displayed on the input unit 21 will be described here, and detailed description of the other configurations will be omitted.

### [Controller 20']

The controller 20' controls the drive of the above-described components, and is constituted by a computer similarly to that in the first embodiment. The controller 20' includes an input/output controller 20a, a speed storage unit 20b, and a drive controller 20c as functional components. These are as follows.

### -Input/output controller 20a-

Based on input information from the input unit 21, the input/output controller 20a extracts the moving speed [S] of the regulating member 14 in the three-dimensional PBF-AM to be performed next from the database stored in the speed storage unit 20b. The input/output controller 20a transmits the extracted moving speed [S] to the drive controller 20c.

Furthermore, the input/output controller 20a causes the display unit included in the input unit 21 to display a predetermined screen at a predetermined timing.

### -Speed storage unit 20b-

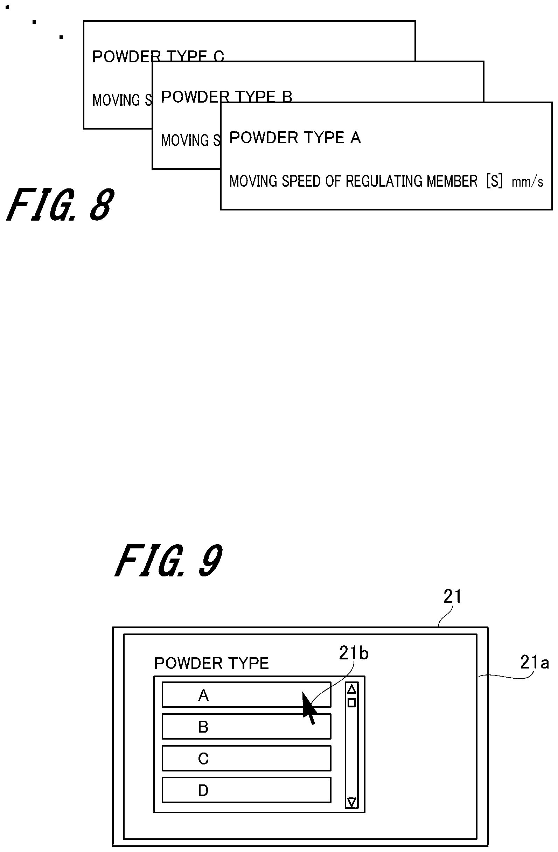

The speed storage unit 20b stores a moving speed database in which the type of the powder 100 and an optimal moving speed [S1] of the regulating member 14 are associated with each other. FIG. 8 is a view illustrating the moving speed database for the regulating member in the three-dimensional PBF-AM apparatus according to the second embodiment. As illustrated in FIG. 8, the moving speed database is a database in which the moving speed [S] of the regulating member is stored to correspond to each type of the powder 100. The information constituting this database is information set by the procedure of the method for setting the moving speed [S] of the regulating member 14 described in the first embodiment.

### -Drive controller 20c-

Returning to FIG. 7, the drive controller 20c controls the drive of each component constituting the three-dimensional PBF-AM apparatus 2 on the basis of the information input from the input unit 21 and the information from the input/output controller 20a. In particular, the drive controller 20c controls the movement of the regulating member 14 on the basis of the information input from the input unit 21 and the moving speed [S] of the regulating member 14 acquired from the input/output controller 20a.

### [Input unit 21]

The input unit 21 may be similar to that described in the first embodiment, but preferably includes a display unit. The display unit displays an input screen for setting to perform the three-dimensional PBF-AM.

FIG. 9 is a view illustrating an input screen 21a of the three-dimensional PBF-AM apparatus 2 according to the second embodiment.

With reference to FIGS. 7 to 9, the input unit 21 causes the display unit to display a selection screen for selecting a powder type as the input screen 21a. The timing to display the input screen 21a (selection screen) in the input unit 21 is a timing before the three-dimensional PBF-AM is performed, and the display is performed by an instruction from the input/output controller 20a.

The input unit 21 is configured to be able to designate the powder type by a cursor 21b displayed on the input screen 21a. The information on the powder type designated in the input unit 21 is transmitted to the controller 20'.

### <Three-dimensional PBF-AM method>

The three-dimensional PBF-AM method using the three-dimensional PBF-AM apparatus 2 of the second embodiment as described above is performed as follows. First, an operator of the three-dimensional PBF-AM apparatus 2 inputs, from the input unit 21, manufacturing data necessary for producing a three-dimensional powder bed fusion additive manufactured object.

As a result, the input/output controller 20a of the controller 20' causes the display unit of the input unit 21 to display a selection screen for selecting the powder type as the input screen 21a. The operator selects the powder type of the powder 100 to be used in the three-dimensional PBF-AM from those on the input screen 21a (selection screen) and inputs the selected powder type.

As a result, the input/output controller 20a refers to the moving speed database held by the speed storage unit 20b, and extracts, from the moving speed database, the moving speed [S] of the regulating member 14 held to correspond to the powder type input from the input unit 21. The input/output controller 20a transmits the extracted moving speed [S] of the regulating member 14 to the drive controller 20c.

As a result, based on the manufacturing data input from the input unit 21 and the moving speed [S] of the regulating member 14 acquired from the input/output controller 20a, and further by acquiring a trigger signal to start the manufacturing from the input unit 21, the drive controller 20c executes the manufacturing program held in advance. Since the procedure for executing the manufacturing program by the drive controller 20c is similar to the procedure for executing the manufacturing program by the controller 20 described in the first embodiment, the description thereof will be omitted here.

### <Effects of second embodiment>

According to the second embodiment as described above, in the procedure for performing the three-dimensional PBF-AM, the drive controller 20c, that controls the movement of the regulating member 14 in forming the powder layer 101, controls the movement of the regulating member 14 at the moving speed [S] set to correspond to the powder type designated in the input unit 21. Therefore, it is possible to form the powder layer 101 in which, for each type of the powder 100, the regulating member 14 is moved at the moving speed [S] capable of preventing the granulated powder [M] and the movement trace [t] from being created.

This makes it possible to improve manufacturing accuracy in the three-dimensional PBF-AM.

Furthermore, it is possible to form the powder layer 101 by causing the regulating member 14 to move at the optimal moving speed [S] that suppresses creation of the granulated powder [M] only by the operator inputting the powder type without referring to the database himself/herself.

### <<Modifications of second embodiment>>

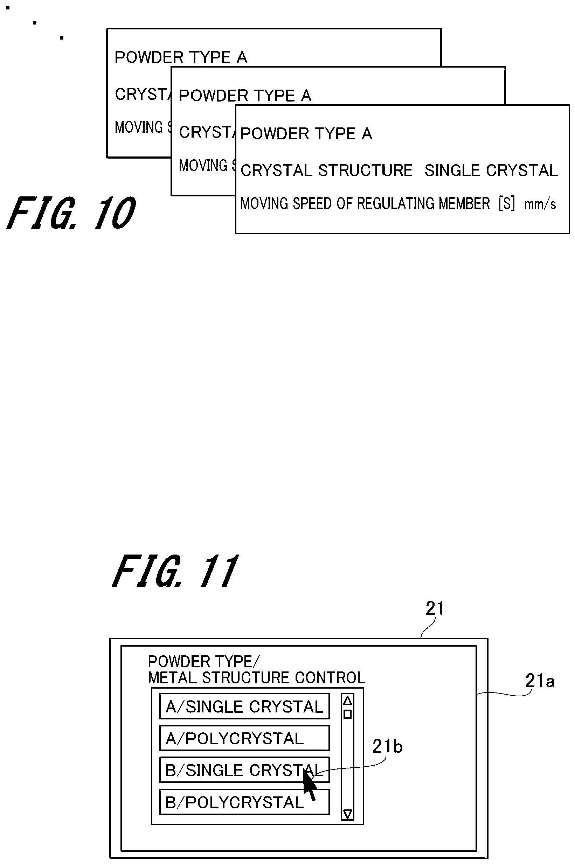

FIG. 10 is a view illustrating another example of the moving speed database for the regulating member in the three-dimensional PBF-AM apparatus 2 (see FIG. 7) according to the second embodiment. In the moving speed database held by the speed storage unit 20b of the three-dimensional PBF-AM apparatus 2 of the second embodiment, the moving speed [S] of the regulating member may be stored to correspond to each type of the powder 100 and to another manufacturing data, as illustrated in FIG. 10. Here, as an example of the another manufacturing data, metal structure control of the three-dimensional PBF-AM, which is one of the manufacturing conditions, is illustrated. That is because the temperature conditions for the powder 100 in respective treatments including the temporary sintering treatment and the melting treatment vary depending on whether a single crystal three-dimensional powder bed fusion additive manufactured object is produced or a polycrystalline three-dimensional powder bed fusion additive manufactured object is produced.

FIG. 11 is a view illustrating another example of the input screen 21a of the three-dimensional PBF-AM apparatus 2 (see FIG. 7) according to the second embodiment, and illustrates a case where the moving speed database held by the speed storage unit 20b is the database illustrated in FIG. 10. With reference to FIGS. 7 and 10 to 11, the input unit 21 causes the display unit to display, as the input screen 21a, a selection screen for selecting the powder type and the metal structure control. The timing to display the input screen 21a (selection screen) in the input unit 21 is a timing before the three-dimensional PBF-AM is performed, and the display is performed by an instruction from the input/output controller 20a.

The input unit 21 is configured to be able to designate the powder type and the metal structure control by the cursor 21b displayed on the input screen 21a. The information on the powder type and the metal structure control designated in the input unit 21 are transmitted to the controller 20'.

### <Three-dimensional PBF-AM method>

The three-dimensional PBF-AM method using the three-dimensional PBF-AM apparatus 2 of the second embodiment as described above is performed as follows. First, an operator of the three-dimensional PBF-AM apparatus 2 inputs, from the input unit 21, manufacturing data necessary for producing a three-dimensional powder bed fusion additive manufactured object.

As a result, the input/output controller 20a of the controller 20' causes the display unit of the input unit 21 to display, as the input screen 21a, a screen for selecting the powder type and the metal structure control. The operator selects the powder type of the powder 100 to be used in the three-dimensional PBF-AM and the metal structure control of the three-dimensional powder bed fusion additive manufactured object to be produced from those on the input screen 21a.

As a result, the input/output controller 20a refers to the moving speed database in the speed storage unit 20b, and extracts, from the moving speed database, the moving speed [S] of the regulating member 14 held to correspond to the powder type and the metal structure control input from the input unit 21. The input/output controller 20a transmits the extracted moving speed [S] of the regulating member 14 to the drive controller 20c.

The subsequent treatments are performed in the same manner as the manufacturing method of the second embodiment.

### <Effects of modifications of second embodiment>

According to the modifications of the second embodiment as described above, it is possible to form the powder layer 101 by causing the regulating member 14 to move at the moving speed [S] in further consideration of the metal structure control, as the another manufacturing data, in addition to the effects of the second embodiment. Therefore, it is possible to more effectively suppress creation of the granulated powder [M].

### Description of Reference Numerals

- 1, 2: three-dimensional PBF-AM apparatus
- 11: forming tank
- 11a: table
- 12: base plate
- 13: powder supply device
- 14: regulating member
- 15: dust box
- 15r: dust box
- 15s: dust box
- 20, 20': controller
- 20a: input/output controller
- 20b: speed storage unit
- 20c: drive controller
- 21: input unit
- 21a: input screen
- 100: powder
- 100': dropped powder
- 101: powder layer
- [ps]: movement start position
- [pr]: return position
- [S]: moving speed

## Claims

1. A three-dimensional powder bed fusion additive manufacturing (PBF-AM) apparatus (1, 2) comprising: a base plate (12); a regulating member (14) configured to level powder (100) supplied onto the base plate (12) by moving over the base plate (12) at a height position keeping a predetermined interval from a surface of the base plate (12) to form a powder layer (101); and a controller (20, 20') configured to control movement of the regulating member (14), wherein
an input unit (21) for inputting manufacturing data is comprised, and
the controller (20, 20') causes the regulating member (14) to move at a moving speed based on the manufacturing data input from the input unit (21).

2. The three-dimensional PBF-AM apparatus (1, 2) according to claim 1, wherein
the controller (20, 20') causes the regulating member (14) to move at a moving speed input from the input unit (21) as the manufacturing data.

3. The three-dimensional PBF-AM apparatus (2) according to claim 1, wherein
the controller (20') includes:
a speed storage unit (20b) that holds a database in which the moving speed of the regulating member (14) is set to correspond to a type of the powder (100);
an input/output controller (20a) that extracts the moving speed of the regulating member (14) from the speed storage unit (20b) on the basis of the type of the powder (100) input from the input unit (21) as the manufacturing data; and
a drive controller (20c) that causes the regulating member (14) to move at the moving speed extracted by the input/output controller (20a).

4. The three-dimensional PBF-AM apparatus (2) according to claim 3, wherein
the speed storage unit (20b) holds a moving speed of the regulating member (14) that corresponds to the type of the powder (100) and another manufacturing data.

5. The three-dimensional PBF-AM apparatus (2) according to claim 4, wherein
the another manufacturing data is metal structure control of a three-dimensional powder bed fusion additive manufactured object to be produced.

6. The three-dimensional PBF-AM apparatus (2) according to any one of claims 3 to 5, wherein
the input unit (21) includes a display unit for displaying a selection screen for selecting the type of the powder (100).

7. A three-dimensional PBF-AM method comprising a step of leveling powder (100) supplied onto a base plate (12) by causing a regulating member (14) to move at a height position keeping a predetermined interval from a surface of the base plate (12) to form a powder layer (101), wherein
a controller that controls drive of the regulating member (14) causes the regulating member (14) to move at a moving speed based on manufacturing data input from an input unit (21).

8. The three-dimensional PBF-AM method according to claim 7, wherein
the moving speed of the regulating member (14) is set on the basis of an amount of the powder (100) dropped off a top of a table disposed to surround the base plate (12) by movement of the regulating member (14).

9. The three-dimensional PBF-AM method according to claim 8, wherein
after the powder (100) is supplied onto the table,
the regulating member (14) is moved back-and-forth over the base plate (12) and the table, and
the moving speed of the regulating member (14) is set in a range where an amount of the powder (100) dropped on a side where the back-and-forth movement of the regulating member (14) is started is the smallest, the powder (100) having been formed by the regulating member (14) shaving off, in a return path of the back-and-forth movement of the regulating member (14), a projection of the powder (100) formed in a forward path of the back-and-forth movement of the regulating member (14) after the regulating member (14) passes through.

10. The three-dimensional PBF-AM method according to claim 9, wherein
the moving speed of the regulating member (14) is set to the lowest speed in a range where an amount of surplus powder (100), which has been dropped on a side where the back-and-forth movement of the regulating member (14) is started, is the smallest.

11. The three-dimensional PBF-AM method according to claim 9, wherein
the moving speed of the regulating member (14) is set for each type of the powder (100) as the manufacturing data.

12. The three-dimensional PBF-AM method according to claim 11, wherein
the moving speed of the regulating member (14) is set to correspond to the type of the powder (100) and the another manufacturing data.

13. The three-dimensional PBF-AM method according to claim 12, wherein
the another manufacturing data is metal structure control of a three-dimensional powder bed fusion additive manufactured object to be produced.

14. The three-dimensional PBF-AM method according to any one of claims 7 to 13, wherein
from a database in which the moving speed of the regulating member (14) is set to correspond to the type of the powder (100), the moving speed of the regulating member (14) is selected on the basis of the type of the powder (100), and
the selected moving speed is input from the input unit (21) as the manufacturing data.

15. A method for setting a moving speed of a regulating member (14) in three-dimensional PBF-AM, the method comprising a step of leveling powder (100) supplied onto a base plate (12) by causing the regulating member (14) to move at a height position keeping a predetermined interval from a surface of the base plate (12) to form a powder layer (101), wherein
after the powder (100) is supplied onto a table disposed to surround the base plate (12),
the regulating member (14) is moved back-and-forth over the base plate (12) and the table, and
the moving speed of the regulating member (14) is set in a range where an amount of the powder (100) dropped on a side where the back-and-forth movement of the regulating member (14) is started is the smallest, the powder (100) having been formed by the regulating member (14) shaving off, in a return path of the back-and-forth movement of the regulating member (14), a projection of the powder (100) formed in a forward path of the back-and-forth movement of the regulating member (14) after the regulating member (14) passes through.
